# EUROPEAN PATENT APPLICATION

(11) **EP 1 160 593 A2**
(43) Date of publication of application: **05.12.2001**
(21) Application number: 01304685.9
(22) Date of filing: 29.05.2001
(51) Int. Cl.: G02B 6/12

(54) **Manufacture of optical waveguide substrate**

(30) Priority: 29.05.2000 JP 2000158089; 08.09.2000 JP 2000272880
(71) Applicant: Shin-Etsu Chemical Co., Ltd., Chiyoda-ku, Tokyo 100-0004 (JP)
(72) Inventor: Makikawa, Shinji, Fine Functional Materials Lab., Annaka-shi, Gunma 379-0127 (JP)
(74) Representative: Bassett, Richard Simon

(57) **Abstract**

An optical waveguide substrate, which has less particles or concave pits caused by Oxidation Induced Stacking Fault on the quartz film when oxidizing the surface of the silicon substrate relatively thickly and forming on its surface a quartz film to become an optical waveguide, is manufactured. The making method of the optical waveguide substrate comprises a step of exposing a silicon substrate to an atmosphere of oxidizing gas while heating to form a quartz film on the surface thereof for an optical waveguide, characterized in that a density of Oxygen contained in said silicon substrate is 24 ppma at maximum. The appratusl for manufacturing the optical waveguide substrate comprises a furnace core tubel8, for mounting a silicon substratel5 to be oxidized and form a quartz film on the surface thereof, of winch exterior circumference is surrounded with a heating furnacel 7, to which a pipel 1 for supplying oxidizing gas and an exhaust pipe are connected.

## Description

The present invention relates to a method and apparatus of manufacturing efficiently an optical waveguide substrate which has high quality of less defects and particles, wherein the surface of a silicon substrate is oxidized relatively thick to form a quartz film.

The optical waveguide substrate is used for making a waveguide device. The waveguide device, which is constituted of optical waveguides and semiconductor integrated circuits, is used for an optical communication. A semiconductor integrated circuit is formed on a silicon substrate. An oxidization film thickness required for the semiconductor integrated circuit is so thin as about 0.2 to 3 micrometers. On the other hand, an optical waveguide is formed on a quartz substrate. The quartz substrate has a quartz film, i.e. silicon dioxide, formed on a surface of a silicon substrate. Since this quartz film functions optically as an under-clad of the optical waveguide, the thickness of the quartz film is required about 5 to 30 micrometers. The thickness thereof is so thick as compared to the oxidization film thickness for the semiconductor integrated circuit.

Methods for forming an oxidization film of such semiconductor or a quartz film of such optical waveguide use an inherent property of silicon, which forms for a substrate of the oxidization film and the quartz film, having strong affinity with oxygen to be easily oxidized.

As a method of forming such a quartz film, there are methods in which the surface of silicon is oxidized through exposing the silicon substrate to an oxidizing gas atmosphere while heating or exposing it to a high temperature steam atmosphere to make high reaction oxygen from the steam with heat decomposition. Specifically, such techniques are the dry oxygen oxidation method, the wet oxidation method, the steam oxidation method, the hydrogen burning oxidation method, and the hydrochloride oxidation method.

Moreover, there is a method of high pressure oxidation, in which oxygen pressure is raised in order to reduce the forming time of the oxidization film, or an oxidation method in which a high reaction oxidizing gas of halogen gas or nitrogen oxide is used.

Among aforementioned methods, the wet oxidation method, the steam oxidation method and the hydrogen burning oxidation method allow relatively fast oxidation. In these methods, high reaction oxygen, which is made from a heat decomposed steam when a silicon substrate is heated to a high temperature in a furnace core tube under ordinary pressure and contacts with steam, oxidize the surface thereof to thus form a quartz film. Furthermore, the methods are widely used since it is unnecessary to prepare a recovery equipment for, for instance, strong toxic halogen gas, nor to make a furnace core tube into a pressure-proof structure.

A quartz film with a thickness of 0.2 to 3 micrometers required for a semiconductor integrated circuit is formed, for instance, by exposing it to a steam atmosphere at 1000°C for 10 to 1000 minutes, which is relatively a short time. Since the quartz film is formed in such a short time, defects do not occur on the surface. In case of forming a quartz film of 10 to 25 micrometers used for optical waveguides, it is necessary to expose it to a steam atmosphere at 1200°C for as long as 20000 to 125000 minutes. Observing the surface of the quartz film being oxidized over a long time of period by illuminating the surface thereof with 100000Lx of light of a high luminosity halogen lamp, particles or concave pits dispersing light shades in ring shapes were found thereon. The inventors of the present invention find through earnest research that the particles and the concave pits were defects, called the Oxidation induced Stacking Fault (hererinafter mentioned as OSF), which has grown extraordinarily in process of oxidation over a long period of time and turned out in the forms of upheaving or caving-in. A minute defect, which serves as a potential core, generates at the time of growing a monocrystal for starting a silicon substrate, and the OSF is generated when the oxygen which is dissolved in a silicon substrate deposits into this core. The shade was observed since quantity of the potential cores changed by influence of conditions such as a temperature slope and others at the time of growing a monocrystal. The defect, which grows at the time of formation of the quartz film, may be observed as foreign matter particles or concave pits as large as 0.5 micrometers.

There has been a problem that such defects, as a result of causing optical diffusion or insertion loss, would not only deteriorate the performance of the optical waveguide substrate but would also make poor yield.

Moreover, to form a quartz film of 10 to 25 micrometers for the usage of an optical waveguide has also been a problem of inefficiency for spending a long period of time of 20000 to 125000 minutes.

It is a primary object of the present invention to provide a method of making a high quality optical waveguide substrate having less particles or less concave pits caused by OSF on its quartz film when forming a quartz film for optical waveguides on the surface of the silicon substrate, which is relatively thickly oxidized under high temperature steam gas atmosphere.

In order to achieve the foregoing primary object, the making method of the optical waveguide substrate comprises a step of exposing a silicon substrate to an atmosphere of oxidizing gas while heating to form a quartz film on the surface thereof for an optical waveguide, characterized in that a density of Oxygen contained in said silicon substrate is 24 ppma at maximum.

The density of Oxygen is shown by amount of moles of the entire silicon substrate atoms to the amount of moles of Oxygen atoms contained in the silicon substrate, and is measured by the infrared absorption-spectrum method based on ASTM'79. The density of Oxygen density is preferably 24 ppma or less. It is most preferable to be less than 16 ppma.

Moreover, it is preferred that the silicon substrate is obtained by cutting a monocrystal obtained with Floating Zone Method (hereinafter mentioned as FZ method).

As methods of growing a silicon monocrystal, there are the FZ method and the Czochralski Method (hereinafter mentioned as CZ method). However, the FZ method characterizes in that it may grow a silicon monocrystal of high purity, which is less polluted by impurities compared to the CZ method. Moreover, the FZ method can obtain a low oxygen density substance quite easily.

For growing a silicon monocrystal by the FZ method, a silicon material rod is grown with vapor of silicon polycrystal, oxidized trichlorosilane as raw material, having average particle diameter of 10 to 1000 micrometers onto a silicon core rod. One end of the silicon material rod of silicon is grinded in the shape of a cone. The tip of the cone part is fused to a seed crystal, then the silicon material rod of the silicon polycrystal and the seed crystal are less located by squeezing seed and thus unified.

Next, the silicon material rod is heated gradually moving from the fused part with the seed crystal to another end part through in a ring heater having high-frequency coil while rotating in cocenter or decenter. The silicon material rod melts and re-crystallizes to monocrystal from the polycrystal thereof.

The silicon substrate cut from the monocrystal obtained with CZ method may be used as well as obtained with the FZ method if a density of the Oxygen thereof is 24 ppma or less. A monocrystal by the CZ method would be obtained by pulling up the seed of the silicon monocrystal in contact with a silicon melted in a quartz pot.

However, according to the CZ method, it is difficult to manufacture a substance having a low density of Oxygen since Oxygen of the quartz pot of itself is easily melted into the molten silicon. Moreover, it is capable of obtaining a mixture of other impurities.

The oxidation of the silicon surface is preferably implemented by mounting the silicon substrate in a furnace core tube and introducing a gas for oxidizing the silicon substrate surface into the furnace core tube and then heating the inside thereof up to 1000 to 1350°C over a long period of time with a heating furnace.

Such a gas may mention steam or Oxygen.

The oxidation can be performed by the method selected from, for example, dry oxygen oxidation method, the wet oxidation, method, the steam oxidation method, the hydrogen burning oxidation method and the hydrochloride oxidation method. The wet oxidation method, the steam oxidation method and the hydrogen burning oxidation method are such that the silicon substrate mounted on a sample base of silicon carbide having high heat resistant is heated to a high temperature inside a furnace core tube of silicon carbide having the same, while in contact with steam. The silicon surface thereof is oxidized by highly reactant oxygen from which the steam heat decomposed, to thus form a quartz film. The oxidation rate thereof is fast.

According to the aforementioned making method of the present optical waveguide substrate, the surface of the silicon substrate can be oxidized relatively large thickness to make quartz film. Thus the optical waveguide substrate having high quality of little defects and particles are easily provided in good yield.

The secondary object of the present invention is to provide an apparatus for manufacturing an optical waveguide substrate through efficient oxidization of a surface of a silicon substrate.

In order to achieve the foregoing secondary object, the apparatus for manufacturing the optical waveguide substrate comprises a furnace core tube, for mounting a silicon substrate to be oxidized and form a quartz film on the surface thereof, of which exterior circumference is surrounded with a heating furnace, to which a pipe for supplying oxidizing gas and an exhaust pipe are connected, characterized in that said gas supply pipe is connected to a vaporizer for evaporating hydrogen peroxide water.

The vaporizer is preferably implemented by equipping a heating equipment for vaporization.

When hydrogen peroxide water is heated over 100°C, hydrogen peroxide gas evaporates with steam gas. The hydrogen peroxide gas is decomposed at a temperature of 500°C or more to thus generate active oxygen having a high reactivity as in the following chemical formula: 2H₂O₂ → 2H₂O + O₂.

If the furnace core tube accompanying a steam gas atmosphere containing hydrogen peroxide gas is heated at 1000 to 1300°C, the oxidization rate of the silicon surface of a silicon substrate speeds up due to the synergistic effect of both of active oxygen produced from a decomposition of steam gas and a decomposition of hydrogen peroxide gas.

It is preferable that the hydrogen peroxide water inside the vaporizer has a concentration of 20 to 70%. If it is thinner than 20%, the hydrogen peroxide gas lacks for accelerating reaction velocity. When thicker than 70%, there is danger of explosion. 30 to 60% is much preferred.

It is preferable that the vaporizer connects through a supplemental pipe to a tank contained hydrogen peroxide water.

Steam pressure of water is higher than hydrogen peroxide gas at the same temperature. Therefore, when hydrogen peroxide water is heated by the vaporizer, more volume of steam is evaporated than hydrogen peroxide than hydrogen peroxide water. In order to prevent the hydrogen peroxide water inside the vaporizer from gradually condensing, approximately 15 percent of hydrogen peroxide water is supplied from the tank to the vaporizer. The hydrogen peroxide water inside the vaporizer can be kept to a fixed concentration by supplying a predetermined amount of hydrogen peroxide water.

The third object of the present invention is to provide a method for making an optical waveguide substrate through efficient oxidization of the surface of a silicon substrate by using the apparatus to achieve the secondary object.

In order to achieve the foregoing third object, the making method of the optical waveguide substrate comprises a step of mounting a silicon substrate inside a furnace core tube arranged with a heating furnace on its exterior circumference, and then a step for heating by the heating furnace while supplying oxidizing gas evaporated from hydrogen peroxide water into the furnace core tube to thus oxidize the surface of the silicon substrate and to form a quartz film thereon.

The present making method can be carried out preferably by implementing evaporation by heating. As for the heating temperature of evaporation, it is preferable to be 110 to 150°C, while 120 to 140°C is much more preferable.

According to the making method of the optical waveguide substrate, the oxidization rate of the silicon surface of the silicon substrate is much faster compared with the case where oxidation is carried out by pure steam gas. Therefore, the optical waveguide substrate becomes to be manufactured in higher yield.

Fig. 1 is a schematic view of the making apparatus used in the making method of the optical waveguide substrate according to the present invention.

Fig. 2 is a schematic view showing another embodiment of the making apparatus used in the making method of the optical waveguide substrate according to the present invention.

Fig. 3 is a graph showing the relationship between the thickness of the quartz film oxidized and formed on the silicon surface of the silicon substrate and the oxidation time required for the formation.

The preferred embodiments of the present invention will be explained below with reference to the drawings. However, claims are not limited by the embodiments.

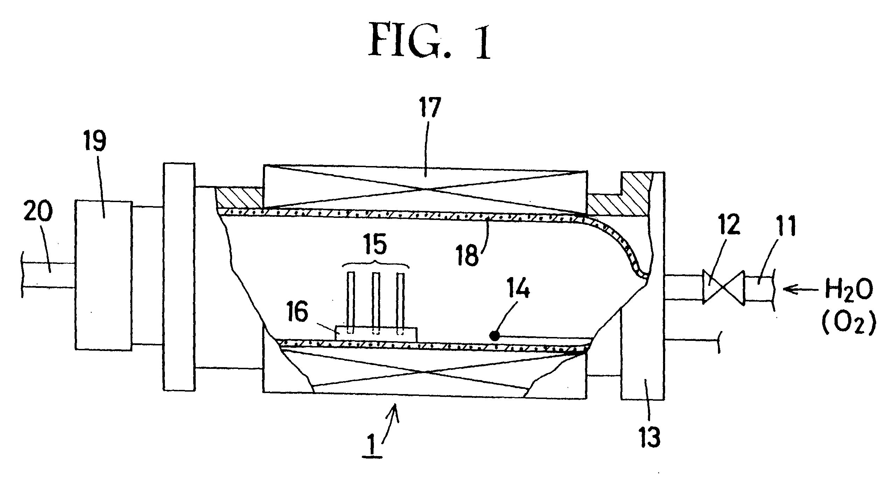

Fig. 1 shows a schematic view of an embodiment of an apparatus manufacturing the optical waveguide substrate according to the present invention carried out in order to achieve the primary purpose. This apparatus 1 is used for oxidizing the silicon surface of the silicon substrate 15 in order to form a quartz film for optical waveguide.

The making apparatus 1 is such that a heating furnace 17 and a heat-resistant container 13 are arranged around the external circumference of a furnace core tube 18, made of silicon carbide.

The silicon substrate 15 is obtained by cutting the cylindrical monocrystal silicon made by the FZ method in a predetermined size and predetermined thickness.

The silicon substrate 15 is inserted in a groove cut on a sample base 16 made of silicon carbide. The sample base 16 is inserted in the furnace core tube 18. One end of the furnace core tube 18 is covered with a lid 19 attached to an exhaust pipe 20. The other end of the furnace core tube 18 roughly sealed up is connected to an introduction pipe 11 to introduce oxidizing gas for the silicon surface of the silicon substrate.

The gas is introduced by opening a switch valve 12 to control introduction of gas arranged en route to the gas introduction pipe 11. The furnace core tube 18 is slowly heated by the heating furnace 17 until the temperature inside the furnace core tube 18 is detected at 1200 to 1350°C by a temperature sensor 14 consisting of a thermo-couple. The temperature is maintained while introduction of the oxidizing gas continues. The silicon surface of the silicon substrate 15 is oxidized by oxidizing gas, such as active oxygen generated by heat decomposition of steam, to thus form a quartz film as shown in the chemical formula: Si + O₂ → SiO₂. When oxidization is completed, introduction of the oxidizing gas is stopped. The furnace core tube 18 is slowly cooled. The sample base 16 is drawn out and the optical waveguide substrate, which has quartz films formed on both surfaces of the silicon substrate, is obtained.

Experimental embodiments of the optical waveguide substrate made by the method according to the present invention will be described below in Examples 1 and 2. An experimental embodiment of the optical waveguide substrate made by another method than the present invention is described in Comparative Example 1.

### (Example 1)

A disk-like silicon substrate 15 made of silicon having a diameter of 4 inches and a thickness of 0.6 mm was made, by chamfering and surface polishing the monocrystal silicon grown by the FZ method, which was cut by a wire-saw. The oxygen density of the silicon substrate was 16 ppma when measured by the infrared absorption-spectrum method based on ASTM'79.

Three plates of the silicon substrate 15 were inserted in the grooves in equal spacing on the sample base 16 made of silicon carbide. The sample base 16 made of silicon carbide was inserted in the furnace core tube 18 made of silicon carbide, which a heating furnace 17 assuming a tube shaped furnace of a kanthal heater, Kanthal APM240 φ (Trade name code by Kanthal Corporation), is arranged to its external circumference. The furnace core tube 18 was covered with a lid 19 having an exhaust pipe 20. 1 L per minute of steam was introduced to the furnace core tube 18 by opening the switch valve 12 arranged en route to the gas introduction pipe 11, which is connected to the quartz container (un-illustrated) where steam is generated by boiling pure water. The temperature inside the furnace core tube 18 was heated up to 1250°C with a gradual heating rate of 3°C per minute in order not to damage the furnace core tube 18 due to sudden rise in temperature. The silicon surface of the silicon substrate 15 was oxidized while continuing to introduce steam at this temperature for 2000 minutes.

After 2000 minutes, the introduction of steam was stopped and the furnace core tube 18 was cooled at a cooling rate of 3°C per minute. When the sample base 16 was drawn out after sufficient cooling, an optical waveguide substrate having a desired thickness of 5.1 micrometers of quartz film formed on the surface of both sides of the silicon substrate 15 was obtained.

When the surface was measured with a foreign matter examining device (provided from Hitachi Electronics Engineering Corporation), it was found that the number of foreign matter particles or concave pits of 0.3 micrometers or larger was as small as less than 30 pieces on average per substrate. When observing the surface, illuminating the surface thereof with 100000Lx of light of a high luminosity halogen lamp in a darkroom, no ring shaped shades were found.

### (Example 2)

Silicon monocrystal cylinder was made by the CZ method in which a seed of a silicon monocrystal immersed in a liquid, which uses a nugget shaped polysilicon as a raw material and is heat melted in a pot, is rotated while being slowly pulled up to grow a monocrystal. A disk shaped silicon substrate was obtained by the silicon monocrystal cylinder being cut and polished. The oxygen density of the silicon substrate was measured and the ones having an oxygen density of 24ppma or less was sharply distinguished. An optical waveguide substrate was obtained in the same way as in Example 1, except for using the sharply distinguished silicon substrate. Table 1 shows the results of the measured amounts of foreign matter particles or concave pits on the surface of the optical waveguide substrate and the results of the existence of ring shaped shades observed, using the same method as in Example 1.

### (Comparative Example 1)

Among the silicon substrates produced in Example 2, the ones having an oxygen density of 48ppma were classified. An optical waveguide substrate was obtained in the same way as in Example 1, except for that the classified silicon substrates were used. Table 1 shows the results of the measured amounts of foreign matter particles or concave pits on the surface of the optical waveguide substrate and the results of the existence ring shaped shades observed, using the same method as in Example 1.

**Table 1**

| | Oxygen Density (ppma) | Making Method | Foreign Matter Particles or Concave Pits (number/sheet) | Shade |
|---|---|---|---|---|
| Example 1 | 16 | FZ method | 30 | No shade |
| Example 2 | 24 | CZ method | 55 | Faint shade |
| Com. Ex. 1 | 48 | CZ method | 194 | Dark shade |

As is apparent from table 1, when the oxygen density of the silicon substrate is 24ppma or less, there are few foreign matter particles or concave pits on the obtained optical waveguide substrate and moreover, very faint or no ring shaped shades appear. When the oxygen density of the silicon substrate exceeds 24ppma, the number of foreign matter particles or concave pits on the surface of the obtained optical waveguide substrate increases radically, and a deep ring shaped shade appears.

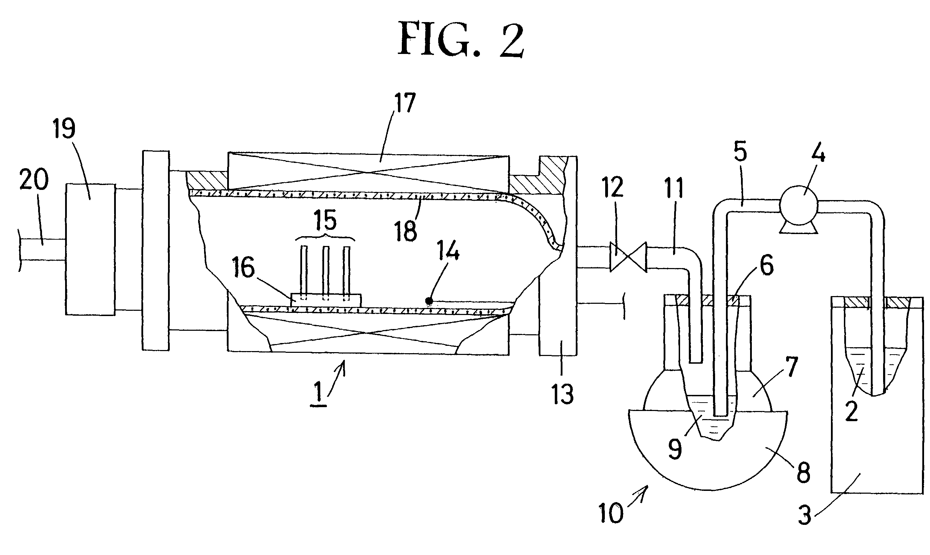

Fig. 2 is a schematic view of the making device 1 used in the making method of the optical waveguide substrate according to another embodiment of the present invention in order to achieve the second object.

The making apparatus 1 is such that a heating furnace 17 is arranged on the outer circumference of the furnace core tube 18 made from highly heat resistant silicon carbide. The surface inside the furnace core tube 18 is applied with several micrometers of silicon carbide film by chemical vapor deposition. One end of the furnace core tube 18 is roughly sealed and is connected with a supply pipe 11, which supplies steam gas containing hydrogen peroxide gas. A switch valve 12, which controls supply of gas, is arranged en route to the gas supply pipe 11. The gas supply pipe 11 is connected to a vaporizer 10. The vaporizer 10 is such that a heater 8 is arranged to the exterior of the container 7, which holds 50% hydrogen peroxide water 9. A top lid 6 through which the gas supply pipe 11 and the hydrogen peroxide water supply pipe 5 is passed covers the container 7. Inside the container 7, the tip of the gas supply pipe 11 is arranged higher than the surface of hydrogen peroxide water 9, and, as for the hydrogen peroxide water supplemental pipe 5, the tip extends into the liquid of hydrogen peroxide water 9. The other end of the hydrogen peroxide water supplemental pipe 5 is inserted in tank 3, and is extended into 15% hydrogen peroxide water 2 with which the tank 3 is filled. A pump 4 is arranged in the middle of the course of this supplemental pipe 5.

A lid 19 to which an exhaust pipe 20 is attached covers other end of the furnace core tube 18. A temperature sensor 14, which consists of a thermo-couple, is arranged inside the furnace core tube 18. The temperature sensor 14 is connected to a temperature display device (un-illustrated). Three cut slots are applied on the sample base 16 made from silicon carbide. The sample base 16 mounted with the silicon substrates 15 inserted in the cut slots thereof is put inside the furnace core tube 18. The furnace core tube 18 is inserted in a protection container 13.

The optical waveguide substrate is made as follows using this apparatus 1.

The three silicon substrates 15 assuming a shape of a disk made from silicon are inserted in the cut slots of the sample base 16, and are arranged in equal spacing.

The inside of the furnace core tube 18 is gradually heated up to 300 to 500°C beforehand by the heating furnace 17 in order to prevent foreign substances from adhering to the silicon substrate 15 by static electricity. After inserting the sample base 16 into the furnace core tube 18 from the open end thereof, a lid 19 is covered thereto. Furthermore, the furnace core tube 18 is heated until its inside temperature reaches a predetermined temperature of 1000 to 1300°C. When it reaches the predetermined temperature the switch valve 12 is opened.

Then, a steam gas containing hydrogen peroxide gas, evaporated by heating the hydrogen peroxide water 9 inside the container 7 by setting the heater 8 of the vaporizer 10 to 100 to 130°C beforehand, flows into the furnace core tube 18 via the gas supply pipe 11. Since the temperature inside the furnace core tube 18 is very high, active oxygen is generated by the heat decomposition carried out by the steam gas as well as the hydrogen peroxide gas. The silicon surface of the silicon substrate 15 is oxidized by this oxygen to form a quartz film.

The condensation rate of the hydrogen peroxide water when heating the hydrogen peroxide water 9 in the container 7 of the vaporizer 10 at a certain fixed temperature is measured in advance. In order to always maintain the hydrogen peroxide water 9 inside the container 7 at a fixed density, a predetermined concentration of hydrogen peroxide water, i.e. the supply amount per unit time of 15% hydrogen peroxide water, is calculated based on the condensation rate. The calculated amount of hydrogen peroxide water 2 is supplied from the tank 3, which is filled with 15% hydrogen peroxide water 2, into the container 7 by driving the pump 4.

After a desired thickness of quartz film is formed, the switch valve 12 is closed and the supply of the steam gas containing hydrogen peroxide gas is stopped. Simultaneously, heating of the hydrogen peroxide water by the heater 8 and supply of the hydrogen peroxide water 2 from the tank 3 are stopped. The furnace core tube 18 is slowly cooled. The sample base 16 is pulled out and an optical waveguide substrate with a quartz film formed on surfaces of both sides of the silicon substrate is obtained.

An experimental embodiment of the optical waveguide substrate using the making apparatus according to the present invention is described below in Example 3. Furthermore, an experimental embodiment of the optical waveguide substrate made by a apparatus other than the present invention is described in comparative example 2.

### (Example 3)

A disk-like silicon substrate 15 made of silicon, which is 4 inches in diameter and is 0.6mm thick, is scraped partly flat on the external circumference. Three plates of the silicon substrates 15 are inserted in the grooves on the sample base 16 in equal spacing, with their flat portions turned up. The furnace core tube 18 is heated gently at a heating rate of 5°C per minute by the heating furnace 17, which is a kanthal heater tubular furnace, in order to prevent the furnace core tube 18 from being damaged by a rapid change in temperature. When the inside of the furnace core tube 18 reaches 500°C, the sample base 16 is inserted and mounted inside the furnace core tube 18, then the tube is covered with a lid 19 which has an exhaust pipe 20. The inside of the furnace core tube 18 is heated up further until it reaches 1200°C.

On the other hand, the heater 8 of the vaporizer is set to 130°C to heat up the 50% hydrogen peroxide water inside the container. Simultaneously, the pump 4 is driven to supply 0.1L per hour of 15% hydrogen peroxide water 2 from the tank 3 to the container, which has a quantity of 1 L of 50% hydrogen peroxide water 9 inside the container.

When the inside of the furnace core tube 18 reaches 1250°C, the switch valve 12 of the gas supply pipe 11 is opened. Accordingly, a steam gas containing hydrogen peroxide gas, which was evaporated by heating the hydrogen peroxide water 9, flows into the furnace core tube 18 through the gas supply pipe 11. The silicon surface of the silicon substrate 15 is oxidized by the active oxygen generated by heat decomposition of the hydrogen peroxide gas and the steam gas inside the furnace core tube 18 to form a quartz film. This temperature is maintained 10000 minutes for oxidization while continuing to supply the hydrogen peroxide gas and the steam gas. After that, the furnace core tube 18 is cooled. The switch valve 12 is closed simultaneously, and the heating due to the heater 8 and the drive of the pump 4 is stopped. The sample base 16 is pulled out, and an optical waveguide substrate having a thickness of 15 micrometers of quartz film formed on surfaces of both sides of the silicon substrate 15 is obtained.

### (Comparative Example 2)

An optical waveguide substrate was experimentally made as in the same way as in Example 3, except for that 50% hydrogen peroxide water included in the container of a vaporizer was replaced by pure water and that pure water was supplied from the tank. It took 12000 minutes to form a quartz film having the same thickness as in the optical waveguide substrate obtained in the case of Example 3.

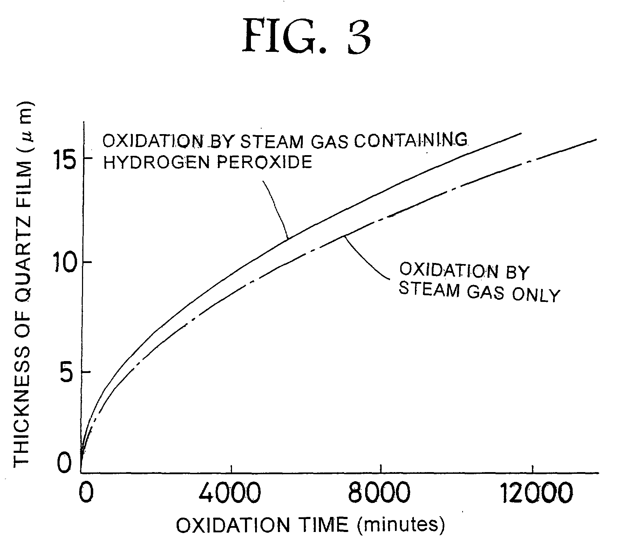

The relationship between the thickness of the quartz film formed by oxidizing the silicon surface of the silicon substrate according to Example 3 and the oxidation time required for the formation is shown in a solid line in Fig. 3. The relationship between the thickness of the quartz film formed according to Comparative Example 2 and the oxidation time thereof is shown in a chain line in Fig. 3. As is apparent from the comparison between the two in Fig. 3, it is faster to obtain a desired quartz film thickness by oxidation according to Example 3 rather than that of Comparative Example 2, since the oxidization rate according to the oxidation in Example 3 is faster than that of Comparative Example 2.

In order to clarify the differences of the oxidization rate at various temperatures of the heater of the vaporizer, Examples 4 to 6 show examples of oxidizing the silicon surface of the silicon substrate by generating the steam gas containing hydrogen peroxide gas. For comparison, the examples of which only stream was generated in order to oxidize the silicon surface of the silicon substrate are shown in Comparative Examples 3 to 5.

### (Examples 4 to 6)

The silicon surface of the silicon substrate was oxidized alike the case of embodiment 3 except for changing the oxidization time into 180 minutes, and setting the temperatures of the heater of the vaporizer to 100°C, 120°C, and 130°C. The results of the measured quartz film thickness formed on the silicon substrate is shown in Table 2.

### (Comparative Examples 3 to 5)

The silicon surface of the silicon substrate was oxidized at an oxidization temperature of 1250°C alike the case of embodiment 3 except for using pure water in replacement of hydrogen peroxide water inside the vaporizer, setting the temperature of the heater of the vaporizer to 100°C, 120°C, and 130°C, and supplying pure water from the tank. The results of the measured quartz film thickness formed on the silicon substrate are shown in Table 2.

**Table 2**

| | | Heating Temperature(°C) | Density of Hydrogen peroxide(%) | Thickness of Quartz Film (*µ*m) |
|---|---|---|---|---|
| Ex. | 4 | 100 | 50 | 1.83 |
| | 5 | 120 | 50 | 1.95 |
| | 6 | 130 | 50 | 2.03 |
| Com. Ex. | 3 | 100 | 0 | 1.80 |
| | 4 | 120 | 0 | 1.80 |
| | 5 | 130 | 0 | 1.81 |

As is seen from Examples 4 to 6 in table 2, oxidation using hydrogen peroxide water under a fixed oxidation time makes the quartz film thickness thicker as the heating temperature of the heater increases. On the other hand, as is seen from Comparative Examples 3 to 5, the usage of pure water for oxidization showed hardly any changes in the quartz film thickness affected from the differences in the heating temperature of the heater. Comparison of Example 6 and Comparative Example 5 in table 2 clarifies that under conditions of fixed oxidization time and heating temperature of the heater, a thicker quartz film thickness can be obtained through oxidization by the steam gas containing hydrogen peroxide gas generated by heating the hydrogen peroxide water than in the case of oxidization through steam generated by heating pure water, since the oxidization rate is faster in the former case.

As is explained in detail, according to the making method of the optical waveguide substrate of the present invention, the surface of a silicon substrate can be oxidized relatively thickly and a high quality optical waveguide substrate with few defects, particles, or concave pits on the surface can be obtained.

Moreover, according to another embodiment of the making method of the optical waveguide substrate of the present invention, an optical waveguide substrate can be obtained through efficient oxidization of the silicon substrate. Furthermore, an yield of an optical waveguide substrate is good. Manufacture of optical waveguide substrates becomes high safety since steam gas and hydrogen peroxide gas are used.

The obtained optical waveguide substrate has so high quality that makes optical waveguide devices manufactured therefrom excellent performance.

## Claims

1. A making method of an optical waveguide substrate comprising a step of exposing a silicon substrate to an atmosphere of oxidizing gas while heating to form a quartz film on the surface thereof for an optical waveguide, **characterized in that** a density of Oxygen contained in said silicon substrate is 24 ppma at maximum.

2. The making method according to claim 1, wherein said silicon substrate is made by cutting a silicon monocrystal obtained with Floating Zone method.

3. An apparatus for manufacturing an optical waveguide substrate comprising a furnace core tube, for mounting a silicon substrate to be oxidized and form a quartz film on the surface thereof, of winch exterior circumference is surrounded with a heating furnace, to which a pipe for supplying oxidizing gas and an exhaust pipe are connected, **characterized in that** said gas supply pipe is connected to a vaporizer for evaporating hydrogen peroxide water.

4. The apparatus according to claim 3, wherein the vaporizer comprises a heating device for heating hydrogen peroxide water therein.

5. The apparatus according to claim 4, wherein the vaporizer connects through a supplemental pipe to a tank contained hydrogen peroxide water.

6. A making method of the optical waveguide substrate comprising a step of mounting a silicon substrate inside a furnace core tube arranged with a heating furnace on its exterior circumference, and then a step for heating by the heating furnace while supplying oxidizing gas evaporated from hydrogen peroxide water into the furnace core tube to thus oxidize the surface of the silicon substrate and to form a quartz film thereon.

7. The making method according to claim 6, wherein said oxidizing gas is evaporated from hydrogen peroxide by heating.

8. The making method according to claim 7, wherein said heating is at a temperature of 110 to 150°C.
